# FASCICULE DE BREVET EUROPEEN

(11) **EP 3 062 407 B1**
(45) Date de publication et mention de la délivrance du brevet: **26.06.2019**
(21) Numéro de dépôt: 15305306.1
(22) Date de dépôt: 27.02.2015
(51) Int. Cl.: H02G 15/10

(54) **MANCHON DE RACCORD ENTRE CÂBLES CONDUCTEURS, PROCÉDÉ DE FABRICATION ET PROCÉDÉ DE MISE EN OEUVRE D'UN TEL MANCHON.**
ANSCHLUSSMUFFE ZWISCHEN LEITERKABELN, HERSTELLUNGSVERFAHREN UND EINBAUVERFAHREN EINER SOLCHEN MUFFE
COUPLING SLEEVE BETWEEN CONDUCTIVE CABLES, MANUFACTURING PROCESS AND IMPLEMENTING PROCESS FOR SUCH A SLEEVE.

(43) Date de publication de la demande: 31.08.2016
(73) Titulaire: UPECA, 39320 Saint-Julien (FR)
(72) Inventeur: Bhatnagar, Yvan, 01250 Bohas (FR)
(74) Mandataire: Lavoix

(56) Documents cités:
- EP-A1- 0 063 478
- EP-A1- 0 138 700
- FR-A1- 2 201 565
- FR-A1- 2 911 441
- US-A1- 2002 170 735

## Description

La présente invention concerne un manchon de raccord, conçu pour recevoir au moins un câble conducteur. Dans le mode de réalisation préféré, le manchon de raccord est conçu pour recevoir deux câbles conducteurs à raccorder bout à bout. L'invention concerne également un procédé de fabrication et un procédé de mise en oeuvre d'un tel manchon.

Le domaine de l'invention est celui des manchons de raccord de câbles conducteurs à basse tension, plus précisément des manchons de raccord pré-isolés à rétreindre.

Dans ce domaine, il est connu de raccorder bout à bout deux câbles conducteurs à l'aide d'un manchon mis en oeuvre par un opérateur. Le branchement entre câbles peut être aérien, souterrain ou aéro-souterrain. Le manchon permet d'assurer l'isolation et l'étanchéité du raccord électrique. Les câbles peuvent avoir des sections similaires ou différentes, selon toute combinaison envisageable dans le cadre de l'application visée. Les raccords sont typiquement soumis à des efforts de traction.

EP-A-1 206 024 décrit un exemple de manchon, comprenant un corps rigide en matériau conducteur et une enveloppe isolante montée sur le corps. Les parties dénudées des câbles conducteurs sont reçues dans le corps rigide et maintenues en position par un système de vissage. Ce système comporte de nombreuses pièces mécaniques, de sorte qu'il n'est pas entièrement satisfaisant en termes d'ergonomie et de coût de fabrication. L'enveloppe est réalisée en matériau élastomère EPDM ou en silicone. Une couche interne de mastic est interposée entre le corps et l'enveloppe pour combler d'éventuels interstices. Une couche externe en matériau semi-conducteur est formée sur la surface externe de l'enveloppe. Cependant, ces couches internes et externes n'offrent pas une protection mécanique et électrique suffisante, de sorte qu'elles ne peuvent pas être considérées comme des enveloppes isolantes. Ainsi, il existe un risque d'électrocution si l'unique enveloppe isolante vient à se dégrader, par exemple en raison d'une chute ou d'un choc sur le manchon, ou du vieillissement du matériau, etc.

Par ailleurs, il existe des manchons du type manchon pré-isolé thermo-rétractable. Un tel manchon nécessite l'utilisation d'un système de chauffe, ce qui complexifie sa mise en oeuvre et crée un risque de brûlure pour l'opérateur ou une personne proche.

Par exemple, EP 0 063 478 A1 décrit un dispositif de liaison de deux extrémités de câble, le dispositif comprenant un corps conducteur avec un tronçon prévu pour être déformé plastiquement par sertissage. Le dispositif comprend également des enveloppes isolantes qui sont enfilées autour du corps conducteur, de façon consécutive à l'opération de sertissage du corps conducteur et à l'ajout d'un mastic. Les enveloppes isolantes sont rétractées à l'aide d'une source de chaleur.

EP 0 138 700 A1 décrit un connecteur comprenant un manchon métallique avec deux logements opposés pour la réception d'extrémités de câble, le connecteur étant pourvu d'une jupe en matériau isolant. Le connecteur est serti sur chaque extrémité de câble. Au cours du sertissage, le manchon est serré successivement sur l'une et l'autre extrémité dénudée, assurant la liaison mécanique et électrique entre les câbles. Simultanément, les parties de jupe s'allongent. Toutefois, la jupe de EP 0 138 700 A1 n'offre qu'une seule couche de matériau isolant, de sorte que ce connecteur connu est de classe d'isolation plus faible que le dispositif de liaison de EP 0 063 478 A1.

Le but de la présente invention est de proposer un manchon de raccord remédiant aux inconvénients ci-dessus.

A cet effet, l'invention a pour objet un procédé de mise en oeuvre d'un manchon de raccord défini dans la revendication 1.

Ainsi, l'invention offre une protection satisfaisante tout en permettant de raccorder le câble dans le manchon de manière simple et efficace. La pluralité d'enveloppes isolantes offre une sécurité supplémentaire en termes d'isolation électrique et d'étanchéité. Le sertissage permet de serrer les extrémités des câbles dans le manchon, et ainsi assurer le contact électrique entre ces extrémités par l'intermédiaire du corps conducteur. Le manchon selon l'invention est dépourvu de système de vissage pour serrer les câbles. Le montage est facilité, car il peut se faire en une unique opération de sertissage. En fonction de la largeur à sertir et des dimensions de l'outil de sertissage utilisé, cette opération peut comprendre une ou plusieurs actions de serrage de l'outil. En outre, le coût de fabrication du manchon est réduit.

D'autres caractéristiques avantageuses de l'invention sont définies dans les revendications 2 à 12.

L'invention sera mieux comprise à la lecture de la description qui va suivre, donnée uniquement à titre d'exemple non limitatif et faite en référence aux dessins annexés sur lesquels :
- la figure 1 est une vue en élévation d'un manchon de jonction conforme à l'invention ;
- la figure 2 est une coupe selon la ligne II-II à la figure 1 ;
- la figure 3 est une coupe selon la ligne III-III à la figure 1 ; et
- la figure 4 est une coupe selon la ligne IV-IV à la figure 1.

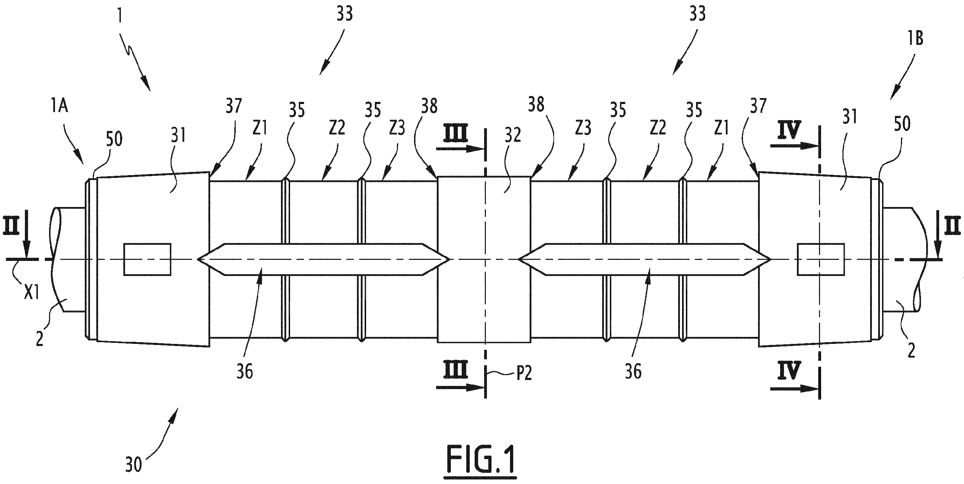

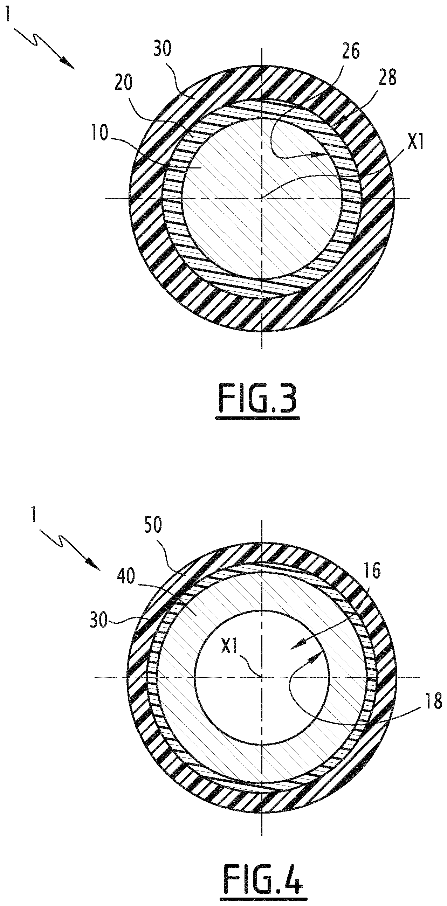

Sur les figures 1 à 4 est représenté un manchon de raccord 1 conforme à l'invention.

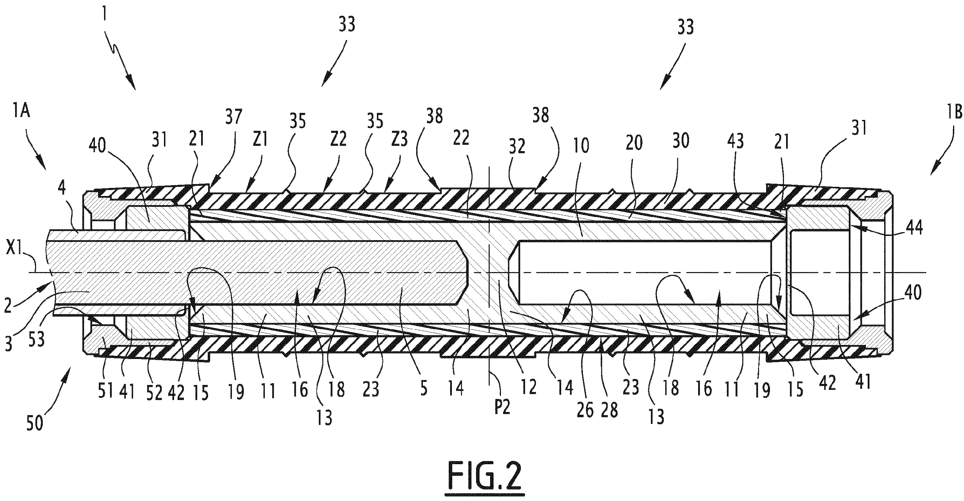

Le manchon 1 est conçu pour raccorder deux câbles conducteurs 2 bout à bout, pour la transmission d'un courant électrique. Les câbles 2 sont représentés partiellement à la figure 1, et seul un câble 2 est représenté en coupe à la figure 2, dans un but de simplification. Chaque câble 2 comprend une âme conductrice 3 et une gaine isolante 4. Chaque câble 2 comporte en outre une extrémité dénudée 5 pour insertion dans le manchon 1. A cette extrémité 5, la gaine 4 est retirée par un opérateur afin de découvrir l'âme 3.

Le manchon 1 comprend un corps conducteur 10, une enveloppe isolante interne 20, une enveloppe isolante externe 30, deux joints isolants 40 et deux bouchons de fermeture 50. Chacun des éléments 10, 20, 30, 40 et 50 est monobloc. Le manchon 1 est centré sur un axe central X1 et s'étend entre deux extrémités 1A et 1B. Le manchon 1 est symétrique par rapport à un plan transversal P2 perpendiculaire à l'axe X1. Le manchon 1 est pré-isolé, c'est-à-dire que les enveloppes 20 et 30 sont déjà en place sur le corps 10 lorsque le manchon 1 est mis à disposition de l'opérateur pour raccorder les câbles 2.

Le corps 10 est réalisé en matériau conducteur, notamment en métal, de préférence en aluminium. Le corps 10 comprend deux tubes latéraux 11 séparés par une butée 12 formée par une paroi centrale. Les tubes 11 sont centrés sur l'axe X1, tandis que la butée 12 s'étend radialement à l'axe X1 dans le plan transversal P2. Chaque tube 11 comporte une partie d'extrémité 15 ouverte à l'extrémité 1A ou 1B, une partie d'extrémité 14 fermée par la butée 12, et une partie intermédiaire 13 agencée entre les parties 14 et 15. Chaque tube 11 comporte un compartiment 16 délimité radialement par un alésage cylindrique 18 et axialement par la butée 12. Les compartiments 16 sont ouverts aux extrémités 15 pour recevoir l'extrémité 5 des câbles 2 et fermés au niveau de la butée 12. A chaque extrémité 15, le tube 11 comporte un chanfrein tronconique 19 pour faciliter l'insertion de l'extrémité 5 dans le compartiment 16. De préférence, une graisse conductrice est disposée dans chaque compartiment 16 pour favoriser le contact électrique entre l'extrémité dénudée 5 des câbles 2, l'alésage 18 et la butée 12.

Sur l'exemple des figures 1 à 4, le corps 10 est initialement une barre pleine, qui est ensuite usinée pour former les compartiments 16, avec la butée 12 agencée entre les compartiments 16. Autrement dit, la butée 12 forme une paroi conductrice de séparation, ou butée étanche de discontinuité, entre les extrémités 5 des câbles 2 positionnés dans le manchon 1.

Les enveloppes 20 et 30 électriquement isolantes sont disposées autour du corps conducteur 10, de manière à assurer une protection mécanique et une isolation électrique du manchon 1. Les enveloppes 20 et 30 sont conçues pour assurer une isolation de classe II selon la norme IEC EN 600950-1, entre l'extrémité dénudée 5 des câbles 2 et le milieu extérieur du manchon 1. L'épaisseur de chaque enveloppe 20 et 30, définie radialement à l'axe X1, dépend du matériau choisi et est prévue pour respecter la réglementation en vigueur, c'est-à-dire pour assurer une protection suffisante.

Les enveloppes 20 et 30 sont distinctes et superposées de manière à offrir des niveaux de protection complémentaires. De préférence, l'enveloppe interne 20 est positionnée sur le corps 10 par assemblage, puis l'enveloppe externe 30 est surmoulée sur l'enveloppe 20, les joints 40 et les bouchons 50. Ainsi, l'enveloppe externe 30 assure une isolation additionnelle, en complément de l'isolation apportée par l'enveloppe interne 20, sur toute la longueur du manchon 1 et à ses extrémités 1A et 1B. Dans le même temps, l'enveloppe interne 20 peut assurer une isolation satisfaisante même en cas de dégradation de l'enveloppe externe 30.

Chacune des enveloppes 20 et 30 est réalisée en matériau électriquement isolant, de préférence en matériau thermoplastique. En alternative, les enveloppes 20 et 30 peuvent être réalisées en un ou plusieurs matériaux autres que des matériaux thermoplastiques, tant que ceux-ci sont adaptés à l'application visée. Par ailleurs, l'enveloppe 20 peut être agencée sur le corps 10 par montage en force, rétreint élastique, trempage en bain, ou toute autre méthode adaptée à l'application visée.

Sur l'exemple des figures 1 à 4, le corps 10 et l'enveloppe 20 présentent une même longueur, tandis que l'enveloppe 30 est plus allongée suivant l'axe X1. En pratique, la longueur de recouvrement des enveloppes 20 et 30 peut être adaptée en fonction de la qualité d'isolation et d'étanchéité recherchée.

Selon un mode de réalisation avantageux, les enveloppes 20 et 30 peuvent être réalisées en matériaux de couleurs différentes, de préférence contrastées. Par exemple, l'enveloppe interne 20 est blanche tandis que l'enveloppe externe 30 est noire. Ainsi, lorsque l'enveloppe 20 est visible sous l'enveloppe 30, l'opérateur peut facilement repérer que l'enveloppe 30 est endommagée. Par ailleurs, on remarque que la couleur de l'enveloppe 30 peut avoir une incidence sur les propriétés physiques du manchon 1, telle que la résistance aux ultraviolets.

L'enveloppe isolante interne 20 présente une forme tubulaire cylindrique centrée sur l'axe X1. L'enveloppe 20 comporte deux parties d'extrémité 21, une partie centrale 22 et deux parties intermédiaires 23 agencées entre les parties 21 et 22. L'enveloppe 20 comporte une surface cylindrique intérieure 26 entourant le corps 10 et une surface cylindrique extérieure 28 entourée par l'enveloppe 30.

L'enveloppe isolante externe 30 présente une forme tubulaire globalement cylindrique centrée sur l'axe X1. L'enveloppe 30 comporte deux parties d'extrémité 31, une partie centrale 32 et deux parties intermédiaires 33 agencées entre les parties 31 et 32. Les parties 31 entourent les joints 40, les bouchons 50, ainsi que les parties d'extrémité 15 et 21 du corps 10 et de l'enveloppe 20. La partie 32 entoure la paroi 12 et la partie centrale 22 de l'enveloppe 20. Les parties 33 entourent les parties 13 et 23 du corps 10 et de l'enveloppe 20. Lorsque l'extrémité 5 du câble 2 est positionnée dans le compartiment 16, la partie 33 entoure cette extrémité 5.

L'enveloppe 30 comporte des zones de sertissage Z1, Z2 et Z3 prévues sur chacune des parties intermédiaires 33. Les zones de sertissage Z1, Z2 et Z3 sont délimitées par des marquages en relief 35, 36, 37 et 38 formés sur les parties 33. Sur l'exemple des figures 1 à 4, les marquages 35-38 comprennent des reliefs annulaires 35, des méplats longitudinaux 36 et des épaulements 37 et 38. Les reliefs annulaires 35 sont formés entre les zones Z1 et Z2, ainsi qu'entre les zones Z2 et Z3, pour séparer deux zones voisines entre elles. Les reliefs annulaires 35 forment des butées longitudinales, facilitant le positionnement d'un outil de sertissage le long de l'enveloppe 30, suivant l'axe X1. Les méplats 36 s'étendent parallèlement à l'axe X1 le long des zones de sertissage Z1, Z2 et Z3, en interrompant localement les reliefs annulaires 35. Les méplats 36 sont prévus pour faciliter le positionnement de l'outil de sertissage autour de l'axe X1. Les épaulements 37 et 38 sont formés respectivement sur les parties 31 et 32, en regard de la partie 33, de part et d'autre des zones Z1 et Z3, radialement à l'axe X1. Les épaulements 37 et 38 forment eux-aussi des butées longitudinales facilitant le positionnement de l'outil de sertissage dans les zones Z1 et Z3. De préférence, l'outil est une pince de sertissage.

Les joints isolants 40 sont réalisés en matériau électriquement isolant, étanche à l'eau, de préférence en élastomère. Chaque joint 40 comprend une partie principale 41 et un voile d'obturation 42. La partie 41 présente une forme annulaire centrée sur l'axe X1 et comporte deux surfaces latérales annulaires 43 et 44 qui s'étendent radialement à l'axe X1. Le voile d'obturation 42 s'étend radialement à l'axe X1 à l'intérieur de la partie principale 41, du côté de la surface 43. Le voile d'obturation 42 est prévu pour protéger le compartiment 16 du corps conducteur 10 de la poussière et autres impuretés, avant insertion d'une extrémité 5 de câble 2, ainsi que pour procurer une isolation électrique et une étanchéité à l'eau. La surface 43 est positionnée en appui contre les parties d'extrémité 15 et 21 du corps 10 et de l'enveloppe 20, de sorte que le joint 10 prolonge légèrement le corps 10 et l'enveloppe 20. Ainsi, les joints 40 permettent de protéger les compartiments 16 et garantir l'étanchéité du raccord entre câbles 2.

Les bouchons 50 sont réalisés en matériau électriquement isolant. Chaque bouchon 50 comprend une partie large 51 et une partie mince 52 venues de matière. La partie 51 comporte un alésage 53. Lorsque l'extrémité 5 du câble 2 est introduite dans le manchon 1, un écart est prévu entre la gaine 4 et l'alésage 53 radialement à l'axe X1. La partie 52 est agencée entre le joint 40 et la partie 31 de l'enveloppe 30. Les bouchons 50 recouvrent partiellement les joints 40 aux extrémités 1A et 1B du manchon 1.

A chaque extrémité 1A et 1B du manchon 1, un marquage indiquant la section du câble 2 à raccorder peut être prévu sur la partie 31 et/ou sur le bouchon 50. Par ailleurs, les bouchons 50 peuvent présenter des couleurs spécifiques en fonction de la section des câbles 2 à raccorder.

Un mode de réalisation préféré d'un procédé de fabrication du manchon 1 est détaillé ci-après. Le procédé comprend une étape d'assemblage a1) consistant à positionner l'enveloppe 20 sur le corps 10, puis une étape de surmoulage a2) consistant à surmouler l'enveloppe 30 sur l'enveloppe 20. Plus précisément, sur l'exemple des figures 1 à 4, l'enveloppe 30 est surmoulée sur l'enveloppe 20 ainsi que sur une partie des joints 40 et des bouchons 50.

Un mode de réalisation d'un procédé de mise en oeuvre du manchon 1 selon la revendication indépendante 1 est détaillé ci-après.

Le procédé comprend une étape optionnelle de dénudage b0), consistant à dénuder l'extrémité 5 d'un câble 2 à raccorder dans le manchon 1. L'étape b0) est réalisée sur l'exemple des figures 1 à 4. En revanche, l'étape b0) n'a pas besoin d'être réalisée si le corps 10 intègre des moyens de perforation de la gaine 4 des câbles 2.

Le procédé comprend une étape d'insertion b1), consistant à insérer l'extrémité 5 de câble 2 suivant l'axe X1 dans l'un des compartiments 16 du corps 10. L'extrémité 5 traverse le bouchon 50, puis le joint annulaire 40 et notamment le voile d'obturation 42, puis l'alésage 18. Cette étape b1) est terminée lorsque la gaine 4 vient en butée contre le voile 42 et/ou l'extrémité 5 vient en butée contre la butée 12.

Le procédé comprend ensuite une étape de sertissage b2) consistant à appliquer un effort de sertissage sur le manchon 1, radialement à l'axe X1 dans l'une des zones de sertissage Z1, Z2 ou Z3, de manière à déformer plastiquement le tronçon 33 de l'enveloppe 23, le tronçon 23 de l'enveloppe 20 puis le tronçon 13 du corps 10, ce qui permet de serrer l'extrémité 5 du câble 2 dans le compartiment 16. Le sertissage réduit localement la section de l'alésage 18 pour écraser l'extrémité 5. En raison du choix des matériaux et des dimensions des pièces 10, 20 et 30, les tronçons 13, 23 et 33 sont conçus pour être déformables plastiquement dans cette étape de sertissage b2). Ainsi, le sertissage permet de réaliser le serrage mécanique du manchon 1 sur chaque extrémité 5 de câble 2, et ainsi assurer le contact électrique entre câbles 2 via le corps conducteur 10. Egalement, la déformation de l'enveloppe 20 comprime les joints 40, ce qui augmente leur contact avec les câbles 2 et renforce l'étanchéité aux extrémités 1A et 1B du manchon 1.

En pratique, les étapes b1) et b2) sont répétées pour chaque extrémité 5 de câble 2 raccordé au manchon 1. En outre, l'étape b2) peut être répétée plusieurs fois pour une même extrémité 5, en appliquant successivement un effort de sertissage dans chaque zone de sertissage Z1, Z2 et Z3 définie sur l'enveloppe 30. En d'autres termes, la même opération de sertissage peut comprendre une ou plusieurs actions de serrage de l'outil, en fonction de la largeur à sertir et des dimensions de cet outil.

Par ailleurs, le manchon 1 peut être conformé différemment des figures 1 à 4 sans sortir du cadre de l'invention. En particulier, chacun de ses éléments constitutifs 10, 20, 30, 40 et 50 peut présenter une configuration différente, adaptée à l'application visée. De préférence, chacun des éléments 10, 20, 30, 40 et 50 est monobloc.

En variante non représentée, le manchon 1 peut comprendre plus de deux enveloppes isolantes telles que les enveloppes 20 et 30, par exemple trois ou quatre enveloppes isolantes. Une isolation multiple est plus coûteuse mais assure une meilleure protection.

Selon une autre variante non représentée, la butée 12 peut comporter un orifice traversant suivant l'axe X1, de sorte que les compartiments 16 ne sont pas séparés mais communiquent l'un avec l'autre. Dans ce cas, la butée 12 ne forme pas une discontinuité étanche dans le corps 10.

Selon une autre variante non représentée, le corps 10 peut comporter un unique compartiment 16 de réception d'une extrémité 5 de câble 2. Dans ce cas, le manchon 1 est par exemple muni d'une cosse du côté opposé au compartiment 16.

Selon une autre variante non représentée, l'enveloppe 30 peut comporter une ou plusieurs zones de marquage Z1, Z2, Z3, délimitées par tous types de marquages 35-38.

Selon une autre variante non représentée, le joint 40 peut comporter des éléments 41 et 42 distincts. La partie 41 est une première pièce annulaire, tandis que le voile 42 est une seconde pièce fixée à cette partie 41, par exemple par soudage ou collage. Dans tous les cas, le voile 42 est de préférence en élastomère.

Quel que soit le mode de réalisation, le manchon 1 comprend au moins deux couches isolantes 20 et 30. En outre, le corps conducteur 10 et les enveloppes isolantes 20, 30, comprennent des tronçons 13, 23, 33, prévus pour être déformés plastiquement lors d'une opération de sertissage de l'extrémité 5 du câble conducteur 2 dans le manchon 1.

En outre, les caractéristiques techniques des différents modes de réalisation et variantes mentionnés ci-dessus peuvent être, en totalité ou pour certaines d'entre elles, combinées entre elles. Ainsi, le manchon 1 peut être adapté en termes de coût, de fonctionnalités et de performance.

## Revendications

1. Procédé de mise en oeuvre d'un manchon (1) de raccord, comprenant un corps conducteur (10) prévu pour recevoir au moins une extrémité (5) de câble conducteur (2), le corps conducteur (10) comprenant deux compartiments (16) prévus pour recevoir chacun l'une des extrémités (5), ainsi qu'une butée (12) formée entre les deux compartiments (16), le manchon (1) comprenant également au moins deux enveloppes isolantes (20, 30) distinctes, incluant une enveloppe interne (20) et une enveloppe externe (30), agencées autour du corps conducteur (10), le corps conducteur (10) et les enveloppes isolantes (20, 30) comprenant des tronçons (13, 23, 33) prévus pour être déformés plastiquement lors d'une opération de sertissage de l'extrémité (5) du câble conducteur (2) dans le manchon (1),
un joint annulaire (40) étant positionné à chaque extrémité (1A, 1B) du manchon (1), en appui contre le corps conducteur (10) et l'enveloppe interne (20),
un bouchon (50) étant positionné à chaque extrémité (1A, 1B) du manchon (1), les bouchons étant réalisés en matériau électriquement isolant, chaque bouchon comprenant une partie large (51) et une partie mince (52) venues de matière, la partie mince (52) étant agencée entre le joint (40) et l'enveloppe externe (30), les bouchons (50) présentant des couleurs spécifiques en fonction de la section des câbles conducteurs (2) à raccorder,
le procédé comprenant :
b1) une étape d'insertion d'une extrémité (5) d'un câble conducteur (2) dans l'un des compartiments (16) du corps conducteur (10), au cours de laquelle l'extrémité (5) du câble conducteur (2) traverse le bouchon (50), puis le joint annulaire (40), puis
b2) une étape de sertissage consistant à appliquer un effort de sertissage sur le manchon (1) de manière à déformer plastiquement les enveloppes isolantes (20, 30) puis le corps conducteur (10) pour serrer l'extrémité (5) du câble conducteur (2) dans le corps conducteur (10).

2. Procédé selon la revendication 1, **caractérisé en ce que** l'enveloppe externe (30) comporte au moins une zone de sertissage (Z1, Z2, Z3) dédiée, qui est délimitée par des marquages (35-38) formés en relief sur l'enveloppe externe (30).

3. Procédé selon la revendication 2, **caractérisé en ce que** les marquages (35-38) comprennent au moins un relief annulaire (35) séparant deux zones de sertissage (Z1, Z2 ; Z2, Z3) voisines.

4. Procédé selon l'une des revendications 2 et 3, **caractérisé en ce que** les marquages (35-38) comprennent au moins un méplat longitudinal (36) s'étendant le long des zones de sertissage (Z1, Z2, Z3).

5. Procédé selon l'une des revendications 2 et 3, **caractérisé en ce que** les marquages (35-38) comprennent au moins un épaulement radial (37, 38) bordant une zone de sertissage (Z1 ; Z3).

6. Procédé selon l'une des revendications précédentes, **caractérisé en ce que** chaque câble (2) comprend une âme conductrice (3) et une gaine isolante (4), **en ce que** la partie large (51) comporte un alésage (53), et **en ce que**, lorsque l'extrémité (5) du câble (2) est introduite dans le manchon (1), un écart est prévu entre la gaine isolante (4) et l'alésage (53) radialement à un axe central (X1) sur lequel est centré le manchon (1).

7. Procédé selon l'une des revendications précédentes, **caractérisé en ce que** les enveloppes isolantes (20, 30) sont réalisées chacune en matériau thermoplastique.

8. Procédé selon l'une des revendications précédentes, **caractérisé en ce que** les enveloppes isolantes (20, 30) sont réalisées en matériaux de couleurs différentes.

9. Procédé selon l'une des revendications précédentes, **caractérisé en ce que** le corps (10) comprend deux tubes latéraux (11) séparés par la butée (12), la butée (12) étant formée par une paroi centrale, chaque tube latéral (11) comportant l'un des compartiments (16), délimité radialement par un alésage cylindrique (18) et axialement par la butée (12), et **en ce que**, au cours de l'étape b1), après avoir traversé le joint annulaire (40), l'extrémité de câble (5) traverse l'alésage (18).

10. Procédé selon l'une des revendications précédentes, **caractérisé en ce que** le joint annulaire (40) comporte un voile d'obturation (42).

11. Procédé selon la revendication 10, **caractérisé en ce que** le voile d'obturation (42) est traversé par l'extrémité (5) au cours de l'étape b1).

12. Procédé selon la revendication 6, prise en combinaison avec la revendication 11, **caractérisé en ce que** l'étape b1) est terminée lorsque la gaine isolante (4) vient en butée contre le voile d'obturation (42) et/ou l'extrémité (5) vient en butée contre la butée (12).

## Patentansprüche

1. Verfahren zum Verwenden einer Verbindungsmuffe (1), umfassend einen leitenden Körper (10), der dafür vorgesehen ist, wenigstens ein Ende (5) eines leitenden Kabels (2) aufzunehmen, wobei der leitende Körper (10) zwei Abteilungen (16), die dafür vorgesehen sind, jeweils eines der Enden (5) aufzunehmen, sowie einen zwischen den zwei Abteilungen (16) gebildeten Anschlag (12) umfasst, wobei die Muffe (1) auch wenigstens zwei unterschiedliche isolierende Hüllen (20, 30) umfasst, die eine innere Hülle (20) und eine äußere Hülle (30) beinhalten, die um den leitenden Körper (10) angeordnet sind, wobei der leitende Körper (10) und die isolierenden Hüllen (20, 30) Abschnitte (13, 23, 33) umfassen, die dafür vorgesehen sind, bei einem Vorgang des Crimpens des Endes (5) des leitenden Kabels (2) in der Muffe (1) plastisch verformt zu werden,
wobei eine ringförmige Dichtung (40) an jedem Ende (1A, 1B) der Muffe (1) an dem leitenden Körper (10) und der inneren Hülle (20) anliegend positioniert ist,
wobei ein Stopfen (50) an jedem Ende (1A, 1B) der Muffe (1) positioniert ist, wobei die Stopfen aus einem elektrisch isolierenden Material hergestellt sind, wobei jeder Stopfen einen breiten Teil (51) und einen schmalen Teil (52) umfasst, die einstückig ausgebildet sind, wobei der schmale Teil (52) zwischen der Dichtung (40) und der äußeren Hülle (30) angeordnet ist, wobei die Stopfen (50) je nach dem Querschnitt der zu verbindenden leitenden Kabel (2) spezifische Farben aufweisen,
wobei das Verfahren Folgendes umfasst:
b1) einen Schritt des Einfügens von einem Ende (5) eines leitenden Kabels (2) in eine der Abteilungen (16) des leitenden Körpers (10), in dessen Verlauf das Ende (5) des leitenden Kabels (2) den Stopfen (50), anschließend die ringförmige Dichtung (40) durchquert, anschließend
b2) einen Crimpschritt, der darin besteht, eine Crimpkraft auf die Muffe (1) auszuüben, um die isolierenden Hüllen (20, 30) und anschließend den leitenden Körper (10) plastisch zu verformen, um das Ende (5) des leitenden Kabels (2) in dem leitenden Körper (10) zusammenzupressen.

2. Verfahren nach Anspruch 1, **dadurch gekennzeichnet, dass** die äußere Hülle (30) wenigstens einen speziellen Crimpbereich (Z1, Z2, Z3) aufweist, der durch Markierungen (35-38) begrenzt ist, die reliefartig an der äußeren Hülle (30) gebildet sind.

3. Verfahren nach Anspruch 2, **dadurch gekennzeichnet, dass** die Markierungen (35-38) wenigstens ein ringförmiges Relief (35) umfassen, das zwei benachbarte Crimpbereiche (Z1, Z2; Z2, Z3) voneinander trennt.

4. Verfahren nach einem der Ansprüche 2 und 3, **dadurch gekennzeichnet, dass** die Markierungen (35-38) wenigstens eine längslaufende Abflachung (36) umfassen, die sich entlang der Crimpbereiche (Z1, Z2, Z3) erstreckt.

5. Verfahren nach einem der Ansprüche 2 und 3, **dadurch gekennzeichnet, dass** die Markierungen (35-38) wenigstens eine radiale Schulter (37, 38) umfassen, die einen Crimpbereich (Z1; Z3) umrandet.

6. Verfahren nach einem der vorhergehenden Ansprüche, **dadurch gekennzeichnet, dass** jedes Kabel (2) einen leitenden Kern (3) und einen isolierenden Mantel (4) umfasst, dass der breite Teil (51) eine Bohrung (53) umfasst, und dass, wenn das Ende (5) des Kabels (2) in die Muffe (1) eingeführt wird, ein Abstand zwischen dem isolierenden Mantel (4) und der Bohrung (53) radial zu einer Mittelachse (X1) vorgesehen ist, auf welche die Muffe (1) zentriert ist.

7. Verfahren nach einem der vorhergehenden Ansprüche, **dadurch gekennzeichnet, dass** die isolierenden Hüllen (20, 30) jeweils aus einem thermoplastischen Material hergestellt sind.

8. Verfahren nach einem der vorhergehenden Ansprüche, **dadurch gekennzeichnet, dass** die isolierenden Hüllen (20, 30) aus Materialien mit unterschiedlichen Farben hergestellt sind.

9. Verfahren nach einem der vorhergehenden Ansprüche, **dadurch gekennzeichnet, dass** der Körper (10) zwei seitliche Rohre (11) umfasst, die durch den Anschlag (12) getrennt sind, wobei der Anschlag (12) durch eine mittige Wand gebildet ist, wobei jedes seitliche Rohr (11) eine der Abteilungen (16) aufweist, die radial durch eine zylindrische Bohrung (18) und axial durch den Anschlag (12) begrenzt ist, und dass während des Schritts b1) das Ende des Kabels (5), nachdem es die ringförmige Dichtung (40) durchquert hat, die Bohrung (18) durchquert.

10. Verfahren nach einem der vorhergehenden Ansprüche, **dadurch gekennzeichnet, dass** die ringförmige Dichtung (40) ein Verschlusselement (42) aufweist.

11. Verfahren nach Anspruch 10, **dadurch gekennzeichnet, dass** das Verschlusselement (42) während des Schritts b1) von dem Ende (5) durchquert wird.

12. Verfahren nach Anspruch 6 in Kombination mit Anspruch 11, **dadurch gekennzeichnet, dass** der Schritt b1) beendet ist, wenn der isolierende Mantel (4) an dem Verschlusselement (42) zur Anlage kommt und/oder das Ende (5) am Anschlag (12) zu Anlage kommt.

## Claims

1. Method for using a connecting sleeve (1), comprising a conductive body (10) provided in order to receive at least one end (5) of conductive cable (2), the conductive body (10) comprising two compartments (16) provided in order each to receive one of the ends (5), and also a limit stop (12) formed between the two compartments (16), the sleeve (1) likewise comprising at least two separate insulating envelopes (20, 30), including an internal envelope (20) and an external envelope (30), which are provided around the conductive body (10), the conductive body (10) and the insulating envelopes (20, 30) comprising sections (13, 23, 33) provided in order to be deformed plastically during an operation of crimping the end (5) of the conductive cable (2) in the sleeve (1),
an annular joint (40) being positioned at each end (1A, 1B) of the sleeve (1), abutting against the conductive body (10) and the internal envelope (20),
a cap (50) being positioned at each end (1A, 1B) of the sleeve (1), the caps being produced in an electrically insulating material, each cap comprising a wide part (51) and a thin part (52) which are of the same material, the thin part (52) being provided between the joint (40) and the external envelope (30), the caps (50) having specific colours as a function of the section of the conductive cables (2) to be connected,
the method comprising:
b1) a step of inserting an end (5) of a conductive cable (2) into one of the compartments (16) of the conductive body (10), in the course of which the end (5) of the conductive cable (2) traverses the cap (50), then the annular joint (40), then
b2) a step of crimping consisting of applying a crimping force on the sleeve (1) in order to deform the insulating envelopes (20, 30) plastically then the conductive body (10) in order to clamp the end (5) of the conductive cable (2) in the conductive body (10).

2. Method according to claim 1, **characterised in that** the external envelope (30) comprises at least one dedicated crimping zone (Z1, Z2, Z3) which is delimited by markings (35 - 38) formed in relief on the external envelope (30).

3. Method according to claim 2, **characterised in that** the markings (35 - 38) comprise at least one annular relief (35) separating two neighbouring crimping zones (Z1, Z2; Z2, Z3).

4. Method according to one of the claims 2 and 3, **characterised in that** the markings (35 - 38) comprise at least one longitudinal flat surface (36) extending along the crimping zones (Z1, Z2, Z3).

5. Method according to one of the claims 2 and 3, **characterised in that** the markings (35 - 38) comprise at least one radial shoulder (37, 38) bordering a crimping zone (Z1; Z3).

6. Method according to one of the preceding claims, **characterised in that** each cable (2) comprises a conductive core (3) and an insulating sheath (4), **in that** the wide part (51) comprises a boring (53), and **in that**, when the end (5) of the cable (2) is introduced into the sleeve (1), an offset is provided between the insulating sheath (4) and the boring (53), radially to a central axis (X1) on which the sleeve (1) is centred.

7. Method according to one of the preceding claims, **characterised in that** the insulating envelopes (20, 30) are each produced in thermoplastic material.

8. Method according to one of the preceding claims, **characterised in that** the insulating envelopes (20, 30) are produced in materials of different colours.

9. Method according to one of the preceding claims, **characterised in that** the body (10) comprises two lateral tubes (11) separated by the limit stop (12), the limit stop (12) being formed by a central wall, each lateral tube (11) comprising one of the compartments (16), delimited radially by a cylindrical boring (18) and axially by the limit stop (12), and **in that**, in the course of step b1), after having traversed the annular joint (40), the end of the cable (5) traverses the boring (18).

10. Method according to one of the preceding claims, **characterised in that** the annular joint (40) comprises a sealing web (42).

11. Method according to claim 10, **characterised in that** the sealing web (42) is traversed by the end (5) in the course of step b1).

12. Method according to claim 6, taken in combination with claim 11, **characterised in that** step b1) is terminated when the insulating sheath (4) comes to abut against the sealing web (42) and/or the end (5) comes to abut against the limit stop (12).
